# EUROPÄISCHE PATENTANMELDUNG

(11) **EP 0 900 811 A1**
(43) Veröffentlichungstag der Anmeldung: **10.03.1999**
(21) Anmeldenummer: 98115959.3
(22) Anmeldetag: 25.08.1998
(51) Int. Cl.: C08G 18/08, C08J 9/08, C08K 5/15

(54) **Verwendung von cyclischen organischen Carbonaten bei der Produktion von Polyurethanschäumen**

(30) Priorität: 06.09.1997 DE 19739009
(71) Anmelder: Th. Goldschmidt AG, 45127 Essen (DE)
(72) Erfinder: Burkhart, Georg, Dr., 45239 Essen (DE); Klincke, Manfred, 44581 Castrop-Rauxel (DE); Weier, Andreas, Dr., 45289 Essen (DE)

(57) **Zusammenfassung**

Die Erfindung betrifft die Verwendung von cyclischen organischen Carbonaten als Additiv in Formulierungen für die Herstellung von Polyurethanschäumen.

## Beschreibung

Die Erfindung betrifft die Verwendung von Carbonaten als Zusatzmittel in Formulierungen für die Produktion von Polyurethanschäumen.

Polyurethanschäume haben einen weiten Anwendungsbereich gefunden, sowohl als konstruktives Element wie auch zur Erfüllung eines weiten Bereiches technischer Aufgaben. Dabei wird unterschieden, je nach der verwendeten Rohstoffbasis, z. B. zwischen Polyether-Polyurethanschäumen und Polyester-Polyurethanschäumen, basierend auf dem jeweilig verwendeten Polyolrohstoff, der als Reaktionskomponente für die verwendeten Isocyanate eingesetzt wird.

Unter strukturellen Gesichtspunkten ist auch die Unterscheidung zwischen Hartschäumen (meist als Isolationsmaterial oder als strukturgebende Einheit eingesetzt) und Weichschaum möglich, der aufgrund seiner elastischen Eigenschaften z. B. im Möbelbereich Verwendung findet.

Wegen der immer weiter steigenden Anforderungen in bezug auf Umweltschutz sind die für die Produktion von Polyurethanschäumen lange Zeit verwendeten physikalischen Treibmittel (CFC, HCFC usw.) nicht als zukunftsträchtige Hilfsmittel bei der Produktion von Polyurethanweichschäumen akzeptiert. Demzufolge wurde versucht, einige Schaumtypen und Schaumqualitäten mit anderen alternativen Treibmitteln, wie z. B. Aceton, Methylenchlorid oder Pentan, herzustellen.

In jüngster Zeit ist eine Technologie entwickelt worden, bei der ein unter Druck stehendes inertes Gas, z. B. CO₂, - neben dem durch eine chemische Reaktion der verwendeten Isocyanate mit Wasser entstehenden CO₂ - als Treibgas verwendet wird. Diese Technologie wird z. B. beschrieben in EP-A-0 645 226. Die Einführung dieser Technologie hat aber gezeigt, daß das spontan einsetzende Aufschäumen des unter Druck stehenden CO₂ beim Austrag der Reaktionsmischung erhöhte Anforderungen an die Zellbildungscharakteristik der in der Schaumformulierung verwendeten Komponenten stellt. Dieses ist auch erklärlich, da die früher im Zeitraum von mehreren Sekunden langsam einsetzende Isocyanat-Wasser-Reaktion nur zu einer langsamen Gassättigung der flüssigen Phase und damit dem langsamen Ausbilden von Gasblasen - dem Ancremen des Schaumes - führte.

Dieser früher langsam ablaufende Prozeß, der die Grundlage für die morphologischen Eigenschaften - Zellenzahl und Zellgrößenverteilung des entstehenden Schaumes - legt, ist jetzt auf Bruchteile von Sekunden zusammengepreßt, nämlich den Zeitrahmen, den die Rohmaterialien brauchen, um von dem unter Druck stehenden Mischkopf einer Verschäumungsmaschine und der anschließenden Auftragsvorrichtung bis auf die Umgebungsdrücke von einer Atmosphäre zu gelangen. Dabei bildet sich, ähnlich wie bei einem Rasierschaum aus einer Spraydose, spontan ein Schaum durch verdampfendes flüssiges CO₂. Das auftretende Fehlerbild bei derartigen Schäumen waren ungleichmäßige, teilweise vergröberte Zellen innerhalb der Schaumstruktur, wobei der Einsatz geeigneter Schaumstabilisatoren durchaus hilfreich zur Minimierung dieser Fehlerbilder sein kann.

Trotzdem ergibt sich oftmals das Problem, daß in Abhängigkeit von Umgebungsparametern (Druck, Rohmaterialtemperaturen, Verwendung von Festkörpern in der Formulierung) selbst nach dem derzeitigen Stand der Technik gut geeignete Stabilisatoren, z. B. solche, die in US-A-5 357 018 oder US-A-5 321 051 beschrieben sind, keine völlig fehlerfreien Schäume produzieren.

Überraschenderweise ist nun gefunden worden, daß die Verwendung von cyclischen organischen Carbonaten bei der Polyurethanschaumherstellung eine deutliche Verbesserung der Zellstruktur der entstehenden Schäume bewirkt, die sich besonders in kritischen Formulierungen oder bei der Verschäumung mit flüssigen, unter Druck stehenden, inerten Gasen zeigt.

Organische Carbonate werden heute in einer Reihe von Polyurethanschäumen angewendet, so z. B. in Polyurethanhartschaumformulierungen als viskositätserniedrigendes Additiv bei der Treibreaktion, beschrieben u. a. in US-A-5 102 923. Auch der Einsatz von organischen Carbonaten als Lösungsmittel (z. B. in US-A-4 028 299 als Compatibilizer) bzw. reaktiver Verdünner in 2-Komponenten-Urethansystemen ist lange bekannt.

Ein beträchtlicher Teil der Polyurethanhartschaum-Literatur beschäftigt sich mit der Verwendung von Carbonaten zur Freisetzung von CO₂ als Treibmittel, analog der in einer normalen Verschäumung ablaufenden Wasser-Isocyanat-Reaktion (US-A-5 076 959 oder auch US-A-5 346 928). In US-A-5 346 928 werden Isocyanatreaktive cyclische Carbonate als 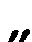 Blowing-promotor" bei Hartschäumen eingesetzt, bei denen durch Einsatz einer inerten, unlöslichen, organischen Flüssigkeit, die als disperse Phase einer Emulsion oder Mikroemulsion vorliegt, die Feinzelligkeit der entstehenden Hartschäume beeinflußt wird. Auch in diesem Falle werden die eingesetzten organischen Carbonate also als Hilfsmittel bei der Treibreaktion bzw. wegen ihrer Emulgierfähigkeit für die verwendete unlösliche organische Flüssigkeit eingesetzt.

Im Weichblockschaum dagegen sind organische Carbonate als Additive besonders in flammgeschützten Schäumen eingesetzt worden, entweder als Mittel zur Verminderung der in sehr heißen Schäumen auftretenden Kernverfärbung (Scorching, in US-A-4 621 105 bzw. EP-A-0 582 328) oder in US-A-4 071 482 als Zusatzmittel in flammgeschützten Schäumen zur Erhöhung der Sprödigkeit der entstehenden Schäume. Dabei ist bemerkenswert, daß ein Schaum sich erfahrungsgemäß umso rauher oder spröder anfühlt, je gröber oder geschlossener die Zellstruktur ist.

Erstaunlicherweise ist nun bei der Verwendung von ringförmigen organischen Carbonaten in Polyurethanschaumformulierungen, insbesondere in Polyurethan-Polyether-Weichschaumformulierungen, gefunden worden, daß derartige Carbonate einen unerwarteten Effekt auf die Zellfeinheit und die Gleichmäßigkeit der ausgebildeten Zellen in derartigen Polyurethanschäumen bewirken. Dieser Effekt zeigt sich besonders in Formulierungen, bei denen entweder durch Verwendung kritischer Rohstoffe oder bei Verschäumung unter ungewöhnlichen Druckverhältnissen eine vergleichsweise hohe Tendenz zur Ausbildung unregelmäßiger bzw. partiell vergröberter Schaumstrukturen zu verzeichnen ist. Dabei sind sowohl chemische Parameter (z. B. die Verwendung von rein Polypropylenglykolen als Polyolkomponente) als auch physikalische Einflußgrößen (z. B. starke Druckabfälle, denen die Formulierungsbestandteile im Zuge der Verschäumung ausgesetzt sind, wie bei der Verschäumung mit flüssigen, unter Druck stehenden inerten Treibmitteln) gemeint.

Geeignete cyclische Carbonate sind solche der Formel 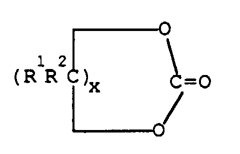
- x =: 2 bis 9,
- R¹, R² =: unabhängig voneinander H oder Kohlenwasserstoffrest mit 1 bis 6 C-Atomen.

Bevorzugt sind cyclische Carbonate mit x = 2 bis 3, besonders bevorzugt sind Propylencarbonat und Ethylencarbonat.

### Beispiele

Ein Polyurethanweichschaum wurde in einer 27 x 27 cm großen offenen Holzkiste mit einer Wandhöhe von 27 cm durch Verschäumung einer Polyurethanformulierung mit folgenden Bestandteilen produziert:
- 100 Tle: eines trifunktionellen Polypropylenglykols der OH-Zahl 56
- 4,05 Tle: Wasser
- 0,2 Tle: eines tertiären Aminkatalysators
- 0,2 Tle: Zinnoktoat
- 3,0 Tle: eines physikalischen Treibmittels
und einer, bezogen auf in der Formulierung vorhandenen Hydroxylgruppen, 1,12molaren Menge an Isocyanatgruppen in Form des T80 genannten 80 : 20-Gemisch der 2,4- und 2,6-Isomeren des Toluoldiisocyanates.

Dabei wurde als schaumstabilisierendes Agens ein durch Hydrosilylierung von Si-H-Gruppen-haltigen Siloxanen mit allylgestarteten Polyethern erhältliches Silicon-Polyether-Copolymer mit Namen BC 2555 entsprechend einem Si-C-Stabilisator, wie z. B. in US-A-5 321 051 beschrieben, zur Stabilisierung der entstehenden Schäume eingesetzt. In den erfindungsgemäßen Beispielen wurde dieser Stabilisator mit geringen Mengen organischer Carbonate abgemischt, während in den nicht erfindungsgemäßen Vergleichsversuchen das pure Produkt oder die Abmischung mit nicht erfindungsgemäßen Abmischkomponenten verwendet wurde. Nach dem Aushärten des Schaumes wurde der erhaltene Schaumkörper horizontal geschnitten und die in einer Höhe von 15 cm oberhalb des Schaumbodens an der Schnittfläche gefundene Zellstruktur bewertet. Bewertungskriterien waren dabei sowohl die Zahl der Zellen/cm als auch die Regelmäßigkeit der erhaltenen Zellstruktur. Zusätzlich wurde als Maß für die Offenzelligkeit der erhaltenen Schäume der Staudruck gemessen, der sich beim Durchströmen der Schaumprobe mit 8 Litern pro Minute bei einer kreisförmigen Zuleitung mit 2 cm Durchmesser ergibt. Je niedriger der gemessene Staudruck ist, desto offenzelliger ist der erhaltene Schaum.

Es wurden folgende Ergebnisse erhalten:

| Konzentration an BC 2555 [pphp] | Additiv | Konz. Verdünnungsmittel [pphp] | Zellstruktur | Zellfeinheit [Zahl der Zellen pro cm] | Staudruck [mm Wassersäule] |
|---|---|---|---|---|---|
| 0,38 | keines | - | leicht unregelmäßig | 6 | 80 |
| 0,38 | Dipropylenglykol | 0,22 | leicht unregelmäßig | 6-7 | 300 |
| 0,38 | Propylencarbonat | 0,22 | regelmäßig | 14 | 27 |
| 0,38 | Ethylencarbonat | 0,22 | regelmäßig | 12 | 34 |
| 0,38 | Dimethylcarbonat | 0,22 | leicht unregelmäßig | 4 | 232 |
| 0,5 | keines | - | regelmäßig | 7-8 | 292 |
| 0,5 | Dipropylenglykol | 0,3 | prakt. regelmäßig | 7 | 125 |
| 0,5 | Propylencarbonat | 0,3 | regelmäßig | 14 | 35 |
| 0,5 | Ethylencarbonat | 0,3 | regelmäßig | 12 | 81 |
| 0,5 | Dimethylcarbonat | 0,3 | regelmäßig | 4-5 | 234 |

Es zeigt sich deutlich, daß die Verwendung ringförmiger organischer Carbonate als Komponente in Weichschaumformulierungen oder als Komponente eines Schaumstabilisators einen unerwarteten positiven Effekt auf die Feinzelligkeit und Regelmäßigkeit der erhaltenen Polyurethanschäume hat. Dieser Effekt konnte auch bei Maschinenversuchen mit flüssigen, unter Druck stehenden, inerten Gasen als Treibmittel (entsprechend dem CarDio®- bzw. dem Novaflex™- Verfahren) nachgewiesen werden.

Dabei wurde eine Rezeptur mit 4,8 Teilen Wasser und 4,0 Teilen Kohlendioxid auf einer CarDio®-Anlage verschäumt. Als Stabilisator wurde jeweils ein hochaktiver Stabilisator entsprechend EP-A-0 585 771 eingesetzt. Das erfindungsgemäße Beispiel benutzt Propylencarbonat als Komponente im Stabilisator, im nicht erfindungsgemäßen Vergleichsbeispiel ist der Anteil an Propylencarbonat durch Dipropylenglykol ersetzt. Anschließend wurde die erhaltene Zellstruktur des Schaumes begutachtet und in die Skala fehlerfrei, leicht gestört, mäßig gestört, gestört oder stark gestört eingeordnet.

| Zusammensetzung der Stabilisatormischung | Zellstruktur |
|---|---|
| 0,9 Tle. Silicon-Polyether-Copolymer und 0,5 Tle. Dipropylenglykol | mäßig gestört |
| 0,9 Tle. Silicon-Polyether-Copolymer und 0,5 Tle. Propylencarbonat | leicht gestört |

Es zeigt sich, daß auch unter den Bedingungen einer Verschäumung mit flüssigen inerten Gasen als Treibmittel wiederum der Effekt einer Verbesserung der Zellfeinheit bei Verwendung von Propylencarbonat auftritt.

In einer Hartschaumanwendung mit 95 Teilen Polyol (OHZ: 250), 5 Teilen Vernetzer (OHZ: 1700), 1 Teil Wasser, 2,5 Teilen eines tertiären Amins, 1 Teil eines kommerziellen Hartschaumstabilisators (Tegostab B 8450, erhältlich von der Th. Goldschmidt AG, Essen), 25 Teilen HCFC 141b und polymeres MDI (Index 110) wurde die Auswirkung einer Zugabe von 5 Teilen Propylencarbonat getestet. Die erhaltenen Ergebnisse beweisen auch in diesem Falle den unerwarteten erfindungsgemäßen Effekt der cyclischen organischen Carbonate auf die Zellfeinheit von Polyurethanschäumen.

| Zusammensetzung der Stabilisatormischung | Zellstruktur |
|---|---|
| 1 Teil Silicon-Polyether-Copolymer B 8450 | 15 - 19 Zellen/cm |
| 1 Teil Silicon-Polyether-Copolymer B 8450 und 5 Teile Propylencarbonat | 21 - 25 Zellen/cm |

## Patentansprüche

1. Verwendung von cyclischen organischen Carbonaten als Additiv in Formulierungen für die Herstellung von Polyurethanschäumen.

2. Verwendung von cyclischen organischen Carbonaten als Additiv in Formulierungen für die Herstellung von Polyurethanschäumen, bei der unter Druck stehende inerte Gase als Treibmittel eingesetzt werden.

3. Verwendung von cyclischen organischen Carbonaten als zellregulierendes Additiv in Formulierungen für die Herstellung von Polyurethan-Polyether-Weichschäumen.
